# EUROPÄISCHE PATENTSCHRIFT

(11) **EP 0 328 124 B1**
(45) Veröffentlichungstag und Bekanntmachung des Hinweises auf die Patenterteilung: **09.10.1996**
(21) Anmeldenummer: 89102302.0
(22) Anmeldetag: 10.02.1989
(51) Int. Cl.: G06K 19/06, G06K 19/077

(54) **Wertkarte mit implantiertem Halbleiterchip**
Credit card with implanted IC
Carte de crédit avec puce sémi-conductrice implantée

(30) Priorität: 12.02.1988 DE 3804361
(43) Veröffentlichungstag der Anmeldung: 16.08.1989
(73) Patentinhaber: Deutsche Telekom AG, 53113 Bonn (DE)
(72) Erfinder: Hegenbarth, Michael, Dipl.-Ing., D-6140 Bensheim (DE); Wolfenstetter, Klaus-Dieter, Dipl.-Math., D-6146 Alsbach (DE)
(74) Vertreter: Gornott, Dietmar, Dipl.-Ing.

(56) Entgegenhaltungen:
- EP-A- 0 225 238
- US-A- 4 443 027
- US-A- 4 511 796

## Beschreibung

Die Erfindung betrifft eine Wertkarte mit implantiertem Halbleiterchip gemäß dem Oberbegriff des Anspruchs 1, für die sich in der Fachwelt die Bezeichnung Chipkarte eingebürgert hat.

Der hier gewählte Begriff Wertkarte soll sowohl die bekannten Kredit- bzw. Debitkarten für Geldausgabeautomaten, Kartentelefone und andere Endgeräte der Kommunikationstechnik als auch Identifikationskarten für die Zugangskontrolle von sicherheitempfindlichen Bereichen umfassen.

Wertkarten mit implantierten Schaltkreisen (Halbleiterchips) sind in vielfältigen Ausführungsformen bekannt (z. B. DE-C-26 21 269 und DE-C-26 21 271). Der in die Wertkarte implantierte integrierte Schaltkreis wird über elektrische Kontakte aktiviert, die sich in dem kartenbetätigten Endgerät befinden.

Kartenbetätigte Endgeräte der Kommunikationstechnik als auch Dienstleistungsautomaten im Bankgewerbe haben in den letzten Jahren eine zunehmende Verbreitung erfahren.

Die äußeren Abmessungen einer solchen Wertkarte sind international durch den Standard ISO 7810, die Position der Kontaktfläche des Halbleiterchips durch den Standard ISO 7816-2 genormt.

Bei der Entwicklung von Halbleiterchips für Wertkarten hat sich in der neuesten Zeit ein derartiger stürmischer Fortschritt ergeben, daß in einem Halbleiterchip die Prozeduren für mehrere verschiedene Anwendungen beinhaltet sind. Deshalb ist die Forderung aufgekommen, die Benutzung soweit als möglich von der Endgerätegröße unabhängig zu machen. Es ist nämlich heute schon unumstritten, daß Chipkarten die zukünftige Gerätetechnologie maßgeblich beeinflussen und mitgestalten werden. Es zeigt sich heute schon am Anfang der Entwicklung, daß die Chipkarte in ihrer derzeitigen Größe für einige Chipkarten-Endgeräte der Zukunft zu groß sein wird.

Es ist eine Wertkarte mit einem Magnetstreifen als Speichermedium bekannt, die aus einem Kartenträger und einem auf diesem aufbringbarem Streifen besteht, der zum Zwecke der Mehrfachverwendung durch einen neuen Streifen ersetzt werden kann. Eine solche mehrteilige Wertkarte kann jedoch nicht in verschiedenen Größen benutzt werden (DE-A-31 29 364).

Es sind Herstellungsverfahren von Chipkarten bekannt, bei denen der Halbleiterchip und die äußeren Anschlußbereiche in eine fensterartige Aussparung des Kartenkörpers eingepaßt werden, ehe sie irreversibel miteinander verbunden werden. Eine Benutzung als verschieden große Wertkarte ist dabei ebenfalls nicht vorgesehen (DE-A-31 30 206, DE-A-31 30 213).

Eine Wertkarte mit einer in ihren Abmessungen gegenüber der Wertkarte wesentlich kleineren Aussparung und einem in die Aussparung passenden Trägerteil, auf dem ein Halbleiterchip und Kontaktflächen angeordnet sind, die mit dem Halbleiterchip in Verbindung stehen und für die Verbindung zwischen Halbleiterchip und Endgerät vorgesehen sind, wobei die Außenabmessungen der Wertkarte und bei in der Wertkarte eingesetztem Trägerteil die Position der Kontaktflächen internationaler Normung entsprechen, ist aus der US 4 511 796 bekannt. Zweck dieser dort angegebenen Vorrichtung ist es, den Halbleiterchip in die Wertkarte ohne Versiegelung zu implantieren, um eine Beschädigung des Halbleiterchips zu vermeiden.

Weiterhin ist durch die US 4 443 027 eine Wertkarte bekannt, die mehrere Halbleiterchips auswechselbar enthält. Zweck des angegebenen Gegenstandes ist es, eine Wertkarte zu schaffen, auf der mehrere Halbleiterchips von unterschiedlichen Anwendern angeordnet werden können.

Endlich ist eine Chipkarte bekannt, bei der zwischen dem IC-Baustein, der Anschlußleitung sowie der Kontaktfläche und dem übrigen Kartenträger eine Sollbruchstelle vorgesehen ist. Eine Verwendung dieser Chipkarte in verschiedenen Größen ist nicht möglich (DE-A-34 20 051).

Die Erfindung hat demzufolge die Aufgabe, den in die Wertkarte implantierten Halbleiterchip unabhängig von der Größe der als Träger verwendeten Wertkarte verwendbar zu machen.

Gegenüber dem bekannten Stand der Technik wird die Aufgabe der Erfindung dadurch gelöst, daß das Trägerteil eine entgegen einer Rastkraft herausdrückbare rechteckige Minichipkarte ist und in der Wertkarte allein durch die Formgebung wenigstens eines Teils seiner Randquerschnitte zu wenigstens einem Teil der Randquerschnitte der Aussparung gehalten ist.

Zweckmäßig macht der herausnehmbare Einsteckteil etwa 0,3 der Höhe und 0,6 der Breite einer Normwertkarte aus und die ihn umgebenden Wertkartenfläche weist eine entsprechende Aussparung auf.

Vorteilhaft ist, daß der herausnehmbare Einsteckteil allein durch die Formgebung wenigstens eines Teils seiner Randquerschnitte zu wenigstens einem Teil der Randquerschnitte der Aussparung gehalten ist.

Hierzu weist der Randquerschnitt des Einrastteils über ca. 0,4 seiner Breite eine zur Querschnittsmitte hin symmetrische Einkerbung unter einem Winkel von 45 Grad auf und der Randquerschnitt der Aussparung ist über ca. 0,4 ihrer Breite mit einer entsprechenden symmetrischen Abschrägung versehen.

Der Randquerschnitt einer Hochseite des Einrastteils weist hingegen zweckmäßig eine halbkreisförmige Abrundung und der Randquerschnitt der entsprechenden Hochseite der Aussparung eine entsprechende halbkreisförmige Auskehlung auf.

In weiterer Ausbildung der Erfindung weist der herausnehmbare Einrastteil an einer von der Chipkontaktfläche möglichst entfernten Stelle einen taktil markierten Druckpunkt auf, welcher als Angriffspunkt der Fingerkräfte beim Herausdrücken des Einrastteils dient.

### Vorteile

Die Vorteile der Wertkarte nach der Erfindung bestehen darin, daß sie trotz beibehaltener äußerer Abmessungen und Chipkontaktflächenposition auch für zukünftige wesentlich kleinere Endgeräte anwendbar bleibt. Der

Benutzer wird seine Wertkarte in der gewohnten Weise wie schon heute seine Scheck- oder Kreditkarte benutzen können. Trifft er auf Endgeräte, die wegen der genormten Größe einer Wertkarte eine solche nicht aufnehmen können, drückt der Benutzer den Einsteckteil aus der Wertkarte heraus und benutzt diesen als Minichipkarte. Auf diese Weise ist mit einer einzigen Wertkarte der gesamte Bereich der Anwendungen abgedeckt und die Probleme der Lagerhaltung verschiedener Wertkarten entfallen.

Im folgenden wird die Figur anhand von 3 Figuren näher beschrieben. Es zeigen
- Fig. 1: die Wertkarte nach der Erfindung mit eingerastetem Einsteckteil
- Fig. 2: Einsteckteil und umgebende Wertkartenaussparung mit verschiedenen Ansichten und Schnitten der jeweiligen Ränder
- Fig. 3: ein Ausführungsbeispiel für die Lage des Einsteckteils auf der genormten Wertkarte

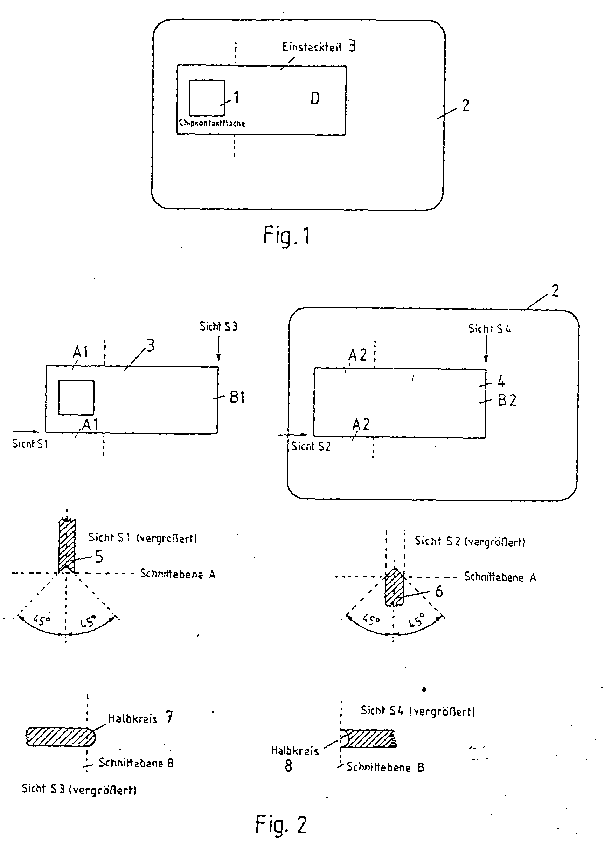

Die Figur 1 zeigt die Umrisse einer herkömmlichen Wertkarte 2 genormter Größe, die an ebenfalls genormter Position die Chipkontaktfläche des implantierten Halbleiterchips 1 trägt. Neu ist, daß der Halbleiterchip auf einem Einsteckteil 3 implantiert ist, welches in einer entsprechenden Aussparung 4 der genormten Wertkarte 2 eingerastet ist.

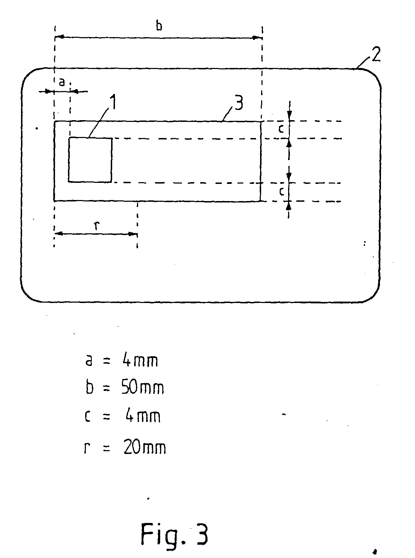

Die Ausmaße des Einsteckteils 3 betragen ca. 0,3 der Höhe und 0,6 der Breite einer genormten Wertkarte 2. Ein Ausführungsbeispiel mit der übrigen Bemessung zeigt die Fig. 3.

Die Fig. 2 oben zeigt links das Einsteckteil 3 mit der Chipkontaktfläche und rechts die genormte Wertkarte 2 mit einer den Abmessungen des Einsteckteils entsprechenden Aussparung 4, die an keiner Stelle den Wertkartenrand erreicht.

In der Fig. 2 links sind die Ränder des Einsteckteils 3 auf ihren Breitseiten bis zu einer Strichlinie beide mit A1 bezeichnet, die den Druckpunkt D benachbarte Hochseite mit B1.

Entsprechend sind in der Fig. 2 rechts mitte die Ränder der Aussparung 4 bis zur Strichlinie mit A2 und der Rand der linken Hochseite mit B2 bezeichnet.

Die beiden Ränder A1 der Breitseiten des Einsteckteils 3 sind auf ca. 0,4 ihrer Gesamtbreite mit einer symmetrischen Einkerbung versehen, wie die Schnittdarstellung Sicht S1 in der Fig. 2 mitte links vergrößert darstellt.

Die beiden Ränder A2 der Breite der Aussparung sind ebenfalls auf 0,4 ihrer Gesamtbreite (siehe Strichlinie) mit einer entsprechenden symmetrischen Auskehlung 6 versehen, wie die Schnittdarstellung Sicht S2 Fig. 2, rechts zeigt. Der Neigungswinkel der Einkerbung 5 wie der Auskehlung 6 beträgt jeweils 45 Grad, wie aus den Sichten S1 und S2 hervorgeht.

Der Randquerschnitt der Hochseite B1 des Einsteckteils ist mit einer halbkreisförmigen Abrundung 7 versehen, siehe Fig. 2 unten links. Der Randquerschnitt der entsprechenden Hochseite der Aussparung B2 ist demgegenüber mit einer halbkreisförmigen Auskehlung 8 gemäß Fig. 2 unten rechts, Sicht S4, versehen.

Durch die Ausbildung der Randquerschnitte A1 und B1 und A2 und B2 wird durch Fingerdruck auf die taktil markierte Stelle D des Einsteckteils ein sicheres Einrasten des Einsteckteils und durch entsprechenden Gegendruck ein Wiederausrasten erzielt.

Die Schnittdarstellung S 1 und S 2, bzw. S 3 und S4 sind selbstverständlich miteinander vertauschbar. Außerdem sind andere Ausführungsformen der Randquerschnitte denkbar, die in der Fig. 2 nur beispielhaft dargestellt sind.

Die Fig. 3 zeigt, wie bereits erwähnt, ein mit Maßen versehenes Ausführungsbeispiel für die Lage des Einsteckteils in der genormten Wertkarte 2. Dabei beträgt der Abstand a des linken Randes des Einsteckteils 3 von der in ihrer Position auf der Wertkarte genormten Chipkontaktfläche 4 mm, die Breite des Einsteckteils 3 beträgt b = 50 mm. Die Chipkontaktfläche ist von den beiden

Breitseiten des Einsteckteils 3 jeweils c = 4 mm entfernt. Die besondere Ausbildung der Randquerschnitte sowohl des Einsteckteils 3 als auch der entsprechenden Aussparung 4 erstreckt sich r = 20 mm von der linken Begrenzung des Einsteckteils 3 zur Mitte hin, wie auch bereits in Fig. 2 durch Strichlinien angedeutet. Die übrigen Maße sind durch ISO-Standards genormt und werden deshalb hier nicht aufgeführt.

## Patentansprüche

1. Wertkarte mit einer in ihren Abmessungen gegenüber der Wertkarte wesentlich kleineren Aussparung und einem in die Aussparung passenden Trägerteil, auf dem ein Halbleiterchip und Kontaktflächen angeordnet sind, die mit dem Halbleiterchip in Verbindung stehen und für die Verbindung zwischen Halbleiterchip und Endgerät vorgesehen sind, wobei die Außenabmessungen der Wertkarte und bei in der Wertkarte eingesetztem Trägerteil die Position der Kontaktflächen internationaler Normung entsprechen,
dadurch gekennzeichnet,
- daß das Trägerteil eine entgegen einer Rastkraft herausdrückbare rechteckige Minichipkarte (3) ist und in der Wertkarte allein durch die Formgebung wenigstens eines Teils seiner Randquerschnitte (A1 und B1) zu wenigstens einem Teil der Randquerschnitte (A2 und B2) der Aussparung (4) gehalten ist.

2. Wertkarte nach Anspruch 1, dadurch gekennzeichnet, daß die Minichipkarte (3) 0,3 der Höhe und 0,6 der Breite einer Wertkarte (2) gemäß internationaler Normung ausmacht

3. Wertkarte nach Anspruch 1, dadurch gekennzeichnet, daß der Randquerschnitt der Minichipkarte (3) über 0,4 seiner Länge (A1) eine zur Querschnittsmitte hin symmetrische Einkerbung (Sicht S1) aufweist und der Randquerschnitt über 0,4 der Breitseite der Aussparung (4) (A2) mit einer entsprechenden symmetrischen Abschrägung (Sicht S2) versehen ist.

4. Wertkarte nach Anspruch 1, dadurch gekennzeichnet, daß der Randquerschnitt der Hochseite (B1) der Minichipkarte (3) eine halbkreisförmige Abrundung (Sicht S3) und der Randquerschnitt der Hochseite (B2) der Aussparung (4) eine entsprechende halbkreisförmige Auskehlung (Sicht S4) aufweist.

5. Wertkarte nach Anspruch 2, dadurch gekennzeichnet, daß die Minichipkarte (3) an einer von der Chipkontaktfläche entfernten Stelle einen taktil markierten Druckpunkt (D) aufweist, welcher als Angriffspunkt der Fingerkräfte beim Herausdrücken der Minichipkarte dient.

## Claims

1. Value card having a cutout whose dimensions are considerably smaller than the value card and having a mounting part which fits into the cutout and on which a semiconductor chip and contact surfaces are arranged which are connected to the semiconductor chip and are intended for the connection between the semiconductor chip and a terminal, the external dimensions of the value card and, in the case of a mounting part being inserted in the value card, the position of the contact surfaces corresponding to international standardization,
characterized
- in that the mounting part is a rectangular mini smart card (3) which can be pushed out against a latching force and is held in the value card just by the shaping of at least one part of its edge cross-sections (A1 and B1) to at least one part of the edge cross-sections (A2 and B2) of the cutout (4).

2. Value card according to Claim 1, characterized in that the mini smart card (3) is equivalent to 0.3 times the height and 0.6 times the width of a value card (2) in accordance with international standardization.

3. Value card according to Claim 1, characterized in that the edge cross-section of the mini smart card (3) has over 0.4 of its length (A1) a notch (view S1) which is symmetrical with respect to the cross-section centre, and the edge cross-section is provided over 0.4 of the breadth side of the cutout (4) (A2) with a corresponding symmetrical chamfer (view S2).

4. Value card according to Claim 1, characterized in that the edge cross-section of the height side (B1) of the mini smart card (3) has a semicircular rounded region (view S3), and the edge cross-section of the height side (B2) of the cutout (4) has a corresponding semicircular indentation (view S4).

5. Value card according to Claim 2, characterized in that the mini smart card (3) has a pressure point (D) at a point away from the chip contact surface, which pressure point (D) is marked in a tactile manner and is used as an application point for the finger forces when the mini smart card is being pushed out.

## Revendications

1. Carte de sécurité présentant une échancrure de dimensions notablement moindres que celles de la carte de sécurité, et une partie de support s'adaptant dans l'échancrure et sur laquelle se trouvent une puce semi-conductrice et des surfaces de contact qui sont en liaison avec la puce semi-conductrice, et sont prévues pour la connexion entre la puce semi-conductrice et un poste terminal, les dimensions extérieures de la carte de sécurité et, lorsque la partie de support est insérée dans la carte de sécurité, la position des surfaces de contact, correspondant à une normalisation internationale,
caractérisée par le fait
- que la partie de support est une carte rectangulaire (3) à minipuce qui peut être extraite en s'opposant à une force d'encliquetage, et est retenue dans la carte de sécurité uniquement par la configuration d'au moins une partie de ses sections transversales marginales (A1 et B1), sur au moins une partie des sections transversales marginales (A2 et B2) de l'échancrure (4).

2. Carte de sécurité selon la revendication 1, caractérisée par le fait que la carte (3) à minipuce représente 0,3 de la hauteur et 0,6 de la largeur d'une carte de sécurité (2) conforme à une normalisation internationale.

3. Carte de sécurité selon la revendication 1, caractérisée par le fait que la section transversale marginale de la carte (3) à minipuce présente, sur 0,4 de sa longueur (A1), une encoche symétrique en direction du centre de la section transversale (vue S1), et la section transversale marginale est munie d'un biseau symétrique correspondant (vue S2) sur 0,4 du côté large de l'échancrure (4).

4. Carte de sécurité selon la revendication 1, caractérisée par le fait que la section transversale marginale du côté haut (B1) de la carte (3) à minipuce comporte un arrondi semi-circulaire (vue S3), et la section transversale marginale du côté haut (B2) de l'échancrure (4) présente une dépouille semi-circulaire correspondante (vue S4).

5. Carte de sécurité selon la revendication 2, caractérisée par le fait que la carte (3) à minipuce présente, dans une zone éloignée de la surface de contact de la puce, un point d'empreinte (D) à repérage tactile servant de point d'attaque des forces des doigts lors de l'extraction de la carte à minipuce.
